# EUROPEAN PATENT SPECIFICATION

(11) **EP 3 061 727 B1**
(45) Date of publication and mention of the grant of the patent: **13.06.2018**
(21) Application number: 14855379.5
(22) Date of filing: 21.10.2014
(51) Int. Cl.: C01B 33/035, B01D 3/14, B01D 53/00, B01D 53/04, C01B 33/03, C01B 33/107

(54) **METHOD FOR MANUFACTURING POLYCRYSTALLINE SILICON**
VERFAHREN ZUR HERSTELLUNG VON POLYKRISTALLINSILIZIUM
PROCÉDÉ DE FABRICATION DE SILICIUM POLYCRISTALLIN

(30) Priority: 23.10.2013 JP 2013220204
(43) Date of publication of application: 31.08.2016
(73) Proprietor: Shin-Etsu Chemical Co., Ltd., Tokyo 100-0004 (JP)
(72) Inventor: ISHIDA, Masahiko, Joetsu-shi Niigata 942-8601 (JP); NETSU, Shigeyoshi, Joetsu-shi Niigata 942-8601 (JP); SAITO, Hiroshi, Joetsu-shi Niigata 942-8601 (JP); HASEGAWA, Masayuki, Joetsu-shi Niigata 942-8601 (JP)
(74) Representative: WP Thompson
(86) International application number: PCT/JP2014/005324
(87) International publication number: WO 2015/059919

(56) References cited:
- DE-A1-102007 050 199
- DE-A1-102011 078 676
- JP-A- S5 433 896
- JP-A- S6 036 318
- JP-A- S6 221 706
- JP-A- H07 277 720
- JP-A- H10 316 413
- JP-A- 2009 062 211
- JP-A- 2010 184 831
- JP-A- 2012 532 083
- US-A1- 2009 165 647
- US-A1- 2011 000 257

## Description

### Technical Field

The present invention relates to a technique for producing polycrystalline silicon, and more particularly relates to a technique for producing semiconductor-grade high-purity polycrystalline silicon.

### Background Art

Trichlorosilane (TCS) is widely used as a raw material for production of polycrystalline silicon. Known methods for synthesizing TCS include: a direct method in which metallurgical-grade silicon and hydrogen chloride are reacted to yield TCS (see Japanese Patent Laid-Open No. 2-208217 (Patent Literature 1), Japanese Patent Laid-Open No. 9-169514 (Patent Literature 2), etc.); and a method in which tetrachlorosilane (STC) is reacted with hydrogen in the presence of metallurgical-grade silicon to cause reduction (STC reduction), yielding TCS (see Japanese Patent Laid-Open No. 60-36318 (Patent Literature 3) etc.).

TCS obtained by such synthesis methods, however, contains a large amount of impurities such as boron and phosphorus (or compounds thereof) derived from metallurgical-grade silicon used as a starting material. These impurities, such as boron and phosphorus, act as a donor or an acceptor in silicon crystal, and thus need to be removed in order to obtain semiconductor-grade high-purity polycrystalline silicon.

An example of hitherto-reported methods for reducing the concentration of impurities (compounds) in TCS is one consisting of adding an organic compound to the TCS to form adducts of the organic compound with the impurities (compounds) and then subjecting the TCS to purification by distillation in which the adducts behave as high-boiling components (see Japanese Patent Laid-Open No. 2005-67979 (Patent Literature 4) and Japanese Patent Laid-Open No. 2012-91960 (Patent Literature 5)).

There have also been reported methods for removing impurities (compounds) from TCS by adsorption of the impurities on, for example, silica gel or activated carbon (see German Patent No. 1,289,834 (Patent Literature 6) and Japanese Patent Laid-Open No. 2010-269994 (Patent Literature 7)).

Siemens process is widely used as a technique for producing high-purity polycrystalline silicon using, as a raw material, TCS (purified TCS) having its impurity content reduced by such a method as described above, in which process the TCS is reduced with hydrogen gas at a high temperature to deposit polycrystalline silicon on a silicon rod (see Japanese Patent Laid-Open No. 2012-153547 (Patent Literature 8), for example).

The reaction in the Siemens process yields only a small amount of deposited polycrystalline silicon which is several percent to a dozen or so percent of the amount of supplied TCS. The remaining portion of the TCS is discharged in exhaust gas from the reactor. The components of the exhaust gas are mainly hydrogen and TCS supplied as raw material gases and further include, for example, dichlorosilane (DCS), STC, and hexachlorodisilane (HCDS) which are formed as by-products of the polycrystalline silicon deposition reaction. These gases are reusable, so the exhaust gas discharged from the reactor is recovered.

The condensable silanes contained in the recovered exhaust gas are separated from, for example, hydrogen and hydrogen chloride, and then fractionated by distillation into a mixed fraction (recovered chlorosilane) of TCS and DCS useful for the polycrystalline silicon deposition reaction and another fraction containing STC as a main component.

The recovered chlorosilane is reused for the polycrystalline silicon deposition reaction. The fraction containing STC as a main component is not suitable as such for the polycrystalline silicon deposition reaction. Thus, the fraction is reused after conversion of STC to TCS by the above-described STC reduction or is used as a raw material for production of silica or the like.

As stated above, the polycrystalline silicon deposition reaction in the Siemens process does not provide high efficiency of conversion from TCS as a raw material to polycrystalline silicon. It is therefore a key technical challenge to construct a closed system that recovers chlorosilane contained in reaction exhaust gas and circulates the recovered chlorosilane to resupply and reuse it for the polycrystalline silicon deposition reaction.

Higher integration of semiconductor devices has created a demand for a higher purity of semiconductor-grade polycrystalline silicon. Meeting this demand essentially requires increasing the purity of a raw material gas, i.e., supplying higher-purity chlorosilane containing a less amount of impurities to the reaction system.

However, the deposition reaction process in a closed circulation system is likely to cause the system to suffer from the accumulation of trace impurity compounds carried by purified TCS or impurities which come into the system when the reactor is opened to take out polycrystalline silicon. These impurities pose an obstacle to the achievement of high purity in the system.

US 2011/000257 copolymers of maleic anhydride and alkyl vinyl ethers, and more particularly, to high molecular weight, homogeneous, branched copolymers of such monomers, as well as a solution process for making these polymers. The document also discloses the used of these materials in denture adhesive compositions and personal care formulations.

DE 10 2007 050199 discloses a method for the treatment of a composition containing inorganic silanes and at least one foreign metal and/or a compound containing a foreign metal, wherein the composition is brought in contact with at least one adsorption agent, and for obtaining the composition, in which the content of foreign metal and/or of a compound containing a foreign metal is reduced, and to a corresponding composition having a reduced foreign metal content, and further to the use of organic resins, activated carbons, silicates, and/or zeolites for the reduction of foreign metals and/or compounds containing foreign metals in compositions of inorganic silanes.

In view of these circumstances, a method for removing impurity compounds that would otherwise accumulate in a circulation system involving deposition reaction has been proposed in which purification by distillation is performed to discharge the impurity compounds out of the system (see Japanese Patent No. 3878278 (Patent Literature 9)).

### Citation List

### Patent Literature

Patent Literature 1
   Japanese Patent Laid-Open No. 2-208217
Patent Literature 2
   Japanese Patent Laid-Open No. 9-169514
Patent Literature 3
   Japanese Patent Laid-Open No. 60-36318
Patent Literature 4
   Japanese Patent Laid-Open No. 2005-67979
Patent Literature 5
   Japanese Patent Laid-Open No. 2012-91960
Patent Literature 6
   German Patent No. 1,289,834
Patent Literature 7
   Japanese Patent Laid-Open No. 2010-269994
Patent Literature 8
   Japanese Patent Laid-Open No. 2012-153547
Patent Literature 9
   Japanese Patent No. 3878278
Patent Literature 10
   International Publication No. WO 2013/094855
Patent Literature 11
   United States Publication No. 2011/000257
Patent Literature 12
   German Patent Application No. DE 10 2011 078676

### Summary of Invention

### Technical Problem

The methods disclosed in Patent Literature 4 and Patent Literature 5 employ chemical treatment to remove impurities from chlorosilane recovered from exhaust gas resulting from deposition reaction. Such chemical treatment consists of adding an organic compound to form adducts of the organic compound with impurity compounds and separating the adducts as high-boiling components by distillation. Thus, the chemical treatment requires an installation for distillation and involves a steady loss of energy.

Additionally, the discharge of the high-boiling adducts out of the system is inevitably accompanied by discharge of a large amount of TCS which is useful, thus leading to an increase in material loss. Furthermore, treatment of organics-containing chlorosilane waste liquid acting as a BOD source typically requires biotreatment to be performed after stabilization of the waste liquid by its reaction with water. This treatment is likely to cause problems such as clogging of the installation with generated solid contents and erosion of the installation by residual chlorine. The treatment also has the problem of odor of organic compounds. Thus, the treatment of organics-containing chlorosilane waste liquid is cumbersome. In brief, the chemical treatment for removing impurities from chlorosilane not only leads to an increase in material loss but also requires cumbersome treatment of organics-containing chlorosilane wastes.

The methods disclosed in Patent Literature 6 and Patent Literature 7 accomplish the removal of impurities from trichlorosilane synthesized from crude raw materials such as metallurgical-grade silicon and tetrachlorosilane by adsorption of the impurities on silica gel or activated carbon. These methods, however, do not assume the use of the impurity adsorption treatment in a system (continuous cycle) that recovers chlorosilane contained in reaction exhaust gas and circulates the recovered chlorosilane to resupply and reuse it for polycrystalline silicon deposition reaction.

A system for polycrystalline silicon deposition in an industrial production site is operated continuously over a fairly long period of time. Thus, the above impurity adsorption treatment performed in this system would entail the breakthrough of an adsorbent during the continuous operation and cause the need for replacement of the adsorbent. In such a case, the system must be opened for a temporary period of time to replace the adsorbent. This poses a problem in that impurities are brought in the system during the replacement and contaminate the system.

In order to prevent impurity compounds contained in chlorosilane from accumulating in a circulation system, the method disclosed in Patent Literature 9 includes purifying recovered chlorosilane further by distillation and discharging the resulting enriched impurity compounds out of the system. In this method, however, the impurity compounds accompany DCS formed as a by-product of the deposition reaction and having a low boiling point, which means that the DCS which is reusable is also discharged out of the system concurrently with the discharge of the impurity compounds out of the system. The DCS concentration in the recovered chlorosilane is typically as high as several percent to a dozen or so percent. The discharge of the DCS out of the system thus causes a great loss.

DCS induces deposition reaction at a lower temperature than TCS, and thus can contribute to an improvement in the efficiency of production of polycrystalline silicon and a reduction in specific electricity consumption. Additionally, there is a suggestion that the presence of DCS is effective in a process for producing large-diameter polycrystalline silicon rods (see International Publication No. WO 2013/094855 (Patent Literature 10)).

The present invention has been made in view of the above problems, and has as its object to provide a method for producing semiconductor-grade high-purity polycrystalline silicon in a closed system, the method comprising recovering chlorosilane contained in reaction exhaust gas and circulating the recovered chlorosilane to resupply and reuse the recovered chlorosilane for polycrystalline silicon deposition reaction without discharging the recovered chlorosilane out of the system.

### Solution to Problem

In order to solve the problems stated above, a method according to the present invention for producing polycrystalline silicon includes:
step A of reacting trichlorosilane (TCS) or a mixture of TCS and dichlorosilane (DCS) with hydrogen to deposit polycrystalline silicon;
step B of recovering exhaust gas generated in the step A and separating the exhaust gas into condensable chlorosilane and other gases;
step C of distilling the chlorosilane condensed in the step B to fractionate the chlorosilane into recovered chlorosilane and another fraction, the recovered chlorosilane being a mixed fraction of TCS and a component having a lower boiling point than TCS;
step F of redistilling all of the recovered chlorosilane fractionated in the step C or a lower-boiling fraction in the recovered chlorosilane to fractionate into an impurity-enriched recovered chlorosilane being a lower-boiling fraction containing the enriched impurity compounds and a TCS fraction, the impurity-enriched recovered chlorosilane obtained is delivered to the step D, and the TCS is delivered to the step A;
step D of bringing the impurity-enriched recovered chlorosilane from step F into contact with an adsorbent to reduce an impurity content of the recovered chlorosilane and thereby obtaining chlorosilane with a reduced impurity content; and
step E of supplying to the step A the chlorosilane with a reduced impurity content which is obtained in the step D.

In one aspect, regeneration treatment in the step D is performed on an adsorption apparatus configured to be capable of undergoing the regeneration treatment without replacement of an adsorbent, and the regeneration treatment may be performed one or more times during a period between the start and end of deposition reaction of the polycrystalline silicon in the step A.

In one aspect, the regeneration treatment involved in the step D is accomplished by a regeneration technique of heating the adsorbent and at the same time allowing an inert gas to flow inside the adsorption apparatus.

Preferably, the inert gas used in the regeneration treatment is nitrogen, hydrogen, helium, or argon which has a dew point not higher than -20°C.

In one aspect, the adsorption apparatus used in the step D may include two or more adsorption columns, and the regeneration treatment may be performed after switching between the two or more adsorption columns.

The adsorbent is preferably selected from activated carbon, activated alumina, and high silica zeolite.

### Advantageous Effects of Invention

The present invention employs a process design including: step D of obtaining chlorosilane with a reduced impurity content from recovered chlorosilane fractionated in step C; and a step of supplying the chlorosilane with a reduced impurity content, which is obtained in the step D, to step A which is a step of depositing polycrystalline silicon.

The employment of this process design allows a process for producing semiconductor-grade high-purity polycrystalline silicon to accomplish removal of impurity compounds which would otherwise accumulate in recovered chlorosilane circulating in a deposition reaction system and thus to yield polycrystalline silicon of stable quality.

Additionally, the present invention does not involve the discharge of useful DCS out of a system but rather allows the direct reuse of the DCS in a closed system, thus making it possible to reduce the material loss and the decline in specific energy consumption. Furthermore, the present invention is capable of adsorbent regeneration and thus eliminates the need to open a circulation system to replace an adsorbent, thereby allowing avoidance of pollution by impurities brought in the system. Still furthermore, the impurity compounds desorbed can be treated by a simple installation such as a wet-type exhaust gas treatment installation.

### Brief Description of Drawings

[Figure 1] Figure 1 is a first exemplary flowchart for carrying out the method of the present invention.
[Figure 2] Figure 2 is a second exemplary flowchart for carrying out the method of the present invention.
[Figure 3] Figure 3 is a third exemplary flowchart for carrying out the method of the present invention.

### Description of Embodiments

Embodiments of the present invention will now be described with reference to the drawings.

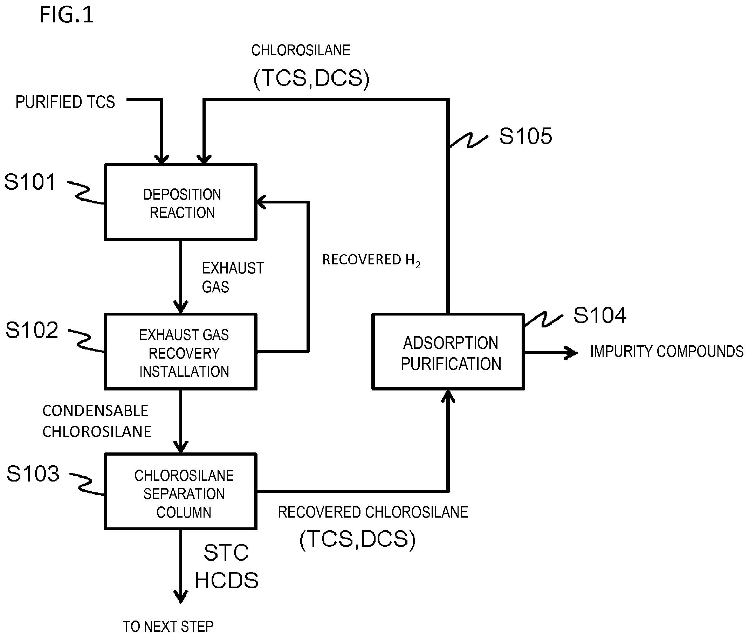

Figure 1 is a first exemplary flowchart for illustrating the method according to the present invention for producing semiconductor-grade high-purity polycrystalline silicon.

In the example shown in this figure, step A (S101) uses purified TCS, chlorosilane obtained in step E (S105) described later, and hydrogen as raw materials to deposit polycrystalline silicon and thereby produce semiconductor-grade high-purity polycrystalline silicon.

In recent years, semiconductor-grade high-purity polycrystalline silicon of high quality has been demanded which has a level of purity obtainable by producing polycrystalline silicon by the Siemens process using a chlorosilane material containing 0.070 ppba or less of phosphorus and 0.010 ppba or less of boron as impurities.

Exhaust gas resulting from the deposition reaction of the step A (S101) contains hydrogen and TCS remaining unreacted and further contains, for example, DCS and STC formed as by-products. This exhaust gas is typically cooled and separated into condensable chlorosilane and other gases such as hydrogen and hydrogen chloride. In the example shown in Figure 1, step B (S102) performs this separation in an exhaust gas recovery installation.

The condensable chlorosilane obtained by the above separation is delivered to step C (S103), in which the chlorosilane is subjected to separation by distillation in a chlorosilane separation column and thus fractionated into a mixture (recovered chlorosilane) of TCS and DCS useful for polycrystalline silicon deposition reaction and another fraction containing STC as a main component.

The other gases separated in the step B (S102) include hydrogen and hydrogen chloride. The hydrogen may be recovered after purification and resupplied to the step A (S101) described above. The hydrogen chloride may be used in synthesis of TCS from metallurgical-grade silicon.

The other fraction containing STC as a main component, which has been separated by distillation in the step C (S103), may be recycled into purified TCS useful for the deposition reaction by subjecting the other fraction to reduction (STC reduction) in the presence of hydrogen and metallurgical-grade silicon or to direct reduction with hydrogen at a high temperature and then purifying the resulting crude silane by distillation.

The recovered chlorosilane separated by distillation in the step C (S103) contains impurity compounds and is thus delivered to step D (S104), in which the recovered chlorosilane is brought into contact with an adsorbent to reduce its impurity content (adsorption purification).

As for the conditions employed for the adsorption in the step D (S104), the temperature is preferably 100°C or lower and more preferably -20 to 40°C. The flow rate has a space velocity (SV) of preferably not less than 0.2 and more preferably 0.5 to 2.

When the adsorption purification uses a fixed-bed adsorption apparatus, it is preferable for the apparatus to have a higher ratio of the filling height L to the column diameter D in order to increase the time to the breakthrough of an adsorbent and reduce the risk of drift flow. Given the practical possibility, the ratio L/D is preferably 2 to 200 and more preferably 5 to 50.

The adsorbent used in the step D can be, for example, activated carbon, activated alumina, or zeolite. The filling installation used can be a fixed-bed installation.

Examples of the activated carbon used as the adsorbent include A-BAC-LP and A-BAC-SP (manufactured by KUREHA CORPORATION) and Spherical SHIRASAGI X7000 (manufactured by Japan EnviroChemicals, Ltd.).

Examples of the activated alumina include KHD-12 (manufactured by Sumitomo Chemical Co., Ltd.).

The zeolite used as the adsorbent is preferably high silica zeolite. Examples thereof include HSZ-320(manufactured by Tosoh Corporation) which is high silica zeolite Y.

The adsorption apparatus used in the step D is preferably configured to be capable of undergoing a regeneration treatment without the replacement of any adsorbent. In this case, the regeneration treatment is performed one or more times during a period between the onset and end of the polycrystalline silicon deposition reaction in the step A.

Additionally, the adsorption apparatus used in the step D preferably includes two or more adsorption columns. The provision of two or more adsorption columns makes it possible, for example, to switch from one adsorption column to another before the performance of the adsorbent in the one adsorption column declines as a result of impurity adsorption and then use the other adsorption column for the adsorption treatment during the regeneration treatment of the one adsorption column. This can increase the efficiency of the adsorption treatment.

One example of the method for quality control of a liquid subjected to the adsorption treatment in the step D is an operation control method consisting of: regularly sampling the liquid from the middle or its vicinity of the adsorption column in use to quantify the impurity content; and, before the breakthrough occurs or when the amount of treatment has reached a given level, disabling the column and switching to another adsorption column.

The adsorbent regeneration involved in the step D is accomplished by draining the liquid from the adsorbent-filled container and then externally heating the container while feeding an inert gas into the container so as to desorb the impurity compounds. Examples of this inert gas include nitrogen, hydrogen, helium, and argon.

Additionally, the inert gas used is preferably a dry gas, since chlorosilane reacts with water to form silica. The dew point of the inert gas is preferably -20°C or lower and more preferably -80°C or lower. Furthermore, the gas used preferably has a total content of 500 ppm or less of substances, such as phosphorus, arsenic, and boron, which can act as a dopant in a semiconductor.

The heating temperature in the adsorbent regeneration is preferably 100°C or higher and more preferably 150°C or higher. Also, the inert gas may be preheated and then supplied.

The adsorbent regeneration is preferably performed at a pressure in the range of 100 KPaG to 0.1 KPaA. For example, it is possible to use a normal pressure in the initial phase of desorption and a reduced pressure in the later phase.

The above regeneration procedures allow the adsorbent to regain an adsorption capacity corresponding to about 30 to 60% of the saturation adsorption capacity of a new one when, for example, the adsorbent used is activated carbon.

The impurity compounds desorbed in the step D are discharged out of the system together with the inert gas and treated in an exhaust gas treatment installation. This exhaust gas treatment may be, for example, hydrolysis by means of a wet spray tower or incineration by means of a burning furnace.

If a new adsorbent to be used contains adsorbed water, it is preferable to remove the water in the same manner as in the above regeneration before using the adsorbent. This is because the water can react with chlorosilane to form silica which may cause performance degradation of the adsorbent by attaching to the surface of the adsorbent.

Contact of a chlorosilane liquid with a new or regenerated adsorbent may generate intense heat and cause rapid evaporation of the liquid, thus resulting in a pressure increase. To avoid such a situation, the adsorbent may be pretreated by mixing the previously-described inert gas and purified chlorosilane (e.g., tetrachlorosilane or trichlorosilane) gas at a concentration of 0.2 to 40 vol% and bringing the mixture into contact with the adsorbent.

A new adsorbent is preferably washed with purified TCS, in view of the influences of, for example, impurity dissolution from the adsorbent and siloxane formation caused by the residual water in the adsorbent. The washing may be done with a liquid or gas. If a liquid is used, the liquid may be fed to the adsorbent in an amount that is about 10 to 1000 times, preferably about 30 to 100 times of the volume of the adsorbent.

The recovered chlorosilane having its impurity compound content reduced in the step D contains TCS and DCS. Step E (S105) is performed to deliver this chlorosilane to the step A, in which the chlorosilane is supplied as a raw material.

Figure 1 shows a flowchart in which purified TCS and chlorosilane obtained through the step E are supplied as raw materials for silicon. In one aspect, however, only the chlorosilane obtained through the step E may be supplied as raw material for silicon source in the second and subsequent batch cycles of the deposition reaction.

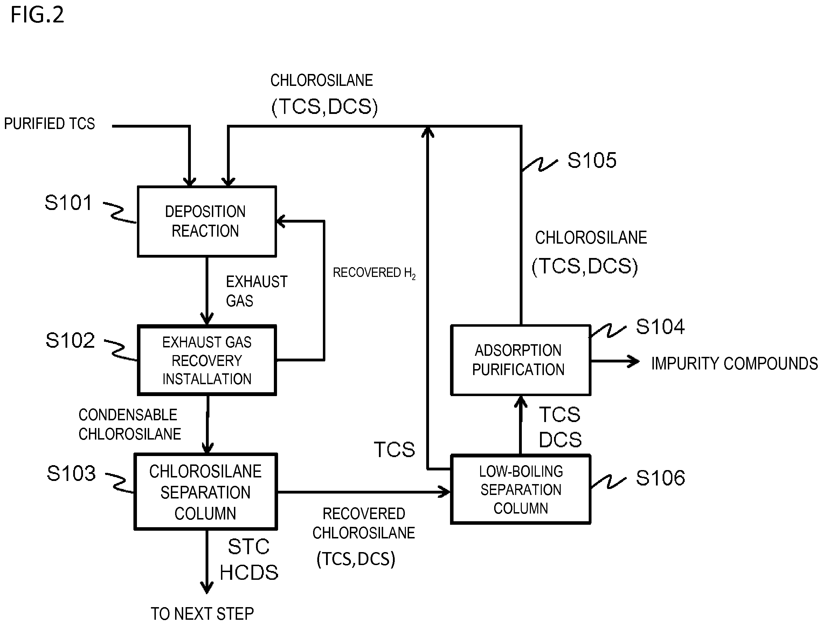

Figure 2 is a second exemplary flowchart for carrying out the method of the present invention. This flowchart differs from the flowchart of Figure 1 by including step F (S106) which uses a low-boiling separation column and enabling more efficient removal of impurity compounds contained in the recovered chlorosilane.

Many of the impurity compounds contained in the recovered chlorosilane have a lower boiling point than TCS. Redistillation in the step F (S106) fractionates the recovered chlorosilane into a TCS fraction and a lower-boiling fraction containing the enriched impurity compounds (impurity-enriched recovered chlorosilane). The impurity-enriched recovered chlorosilane obtained is delivered to the step D (S104). The main component of the impurity-enriched recovered chlorosilane fraction consists of DCS or DCS and TCS.

The chlorosilane having its impurity compound content reduced by contact with an adsorbent in the step D (S104), and the TCS fraction which is a higher-boiling fraction obtained in the step F (S106), are supplied to the step A (S101) as the raw materials through the step E (S105). In general, the higher the concentration of the substances to be adsorbed is, the more the amount of adsorption per unit volume of the adsorbent is. Thus, in this aspect, the concentrating of impurity compounds enables a reduction in the number of times of regeneration of the adsorption column or a reduction in size of the adsorption column.

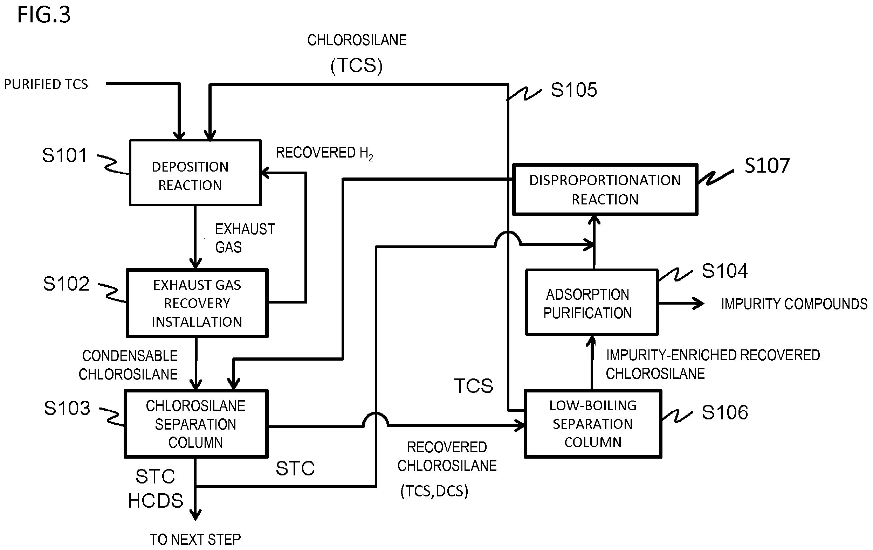

Figure 3 is a third exemplary flowchart for carrying out the method of the present invention. This flowchart differs from the flowchart of Figure 2 by including step G (S107) of subjecting a portion of the STC separated in the step C (S103) to disproportionation reaction together with the chlorosilane purified in the step D (S104) and thereby converting the STC to TCS.

### Examples

Hereinafter, the present invention will be specifically described by Examples. It should be noted that the present invention is not limited by such Examples.

Example 1: Effect of adsorption on reducing impurity content of recovered chlorosilane

A recovered chlorosilane liquid obtained by subjecting a condensate liquid of deposition reaction exhaust gas to separation by distillation was injected into a fixed-bed adsorption column including an activated carbon-filled SUS tube having an inner diameter of 21.7 mm and a height of 1,500 mm through a lower portion of the column at a rate of 450 g/h. An amount of 3 kg of the treated liquid obtained in one pass was sampled into a sealed tank.

Afterwards, the tank maintained at a predetermined temperature was supplied with a predetermined amount of hydrogen to cause bubbling of the liquid and thereby vaporize silane in the tank. The mixed gas of hydrogen and silane was supplied to a small-size, experimental deposition apparatus employing the Siemens process. Thus, polycrystalline silicon was produced.

The polycrystalline silicon obtained was converted to single-crystal silicon by a FZ process (Floating Zone process), and the single-crystal silicon was then subjected to photoluminescence spectroscopy to determine the boron and phosphorus concentrations. The result is shown in Table 1.

### Comparative Example 1: Determination of impurity content of untreated recovered chlorosilane

An unfilled, empty column having the same specifications as that used in Example 1 was subjected to similar washing with trichlorosilane. Then recovered chlorosilane from the same lot as that used in Example 1 was injected into the column, 3 kg of the resulting liquid was sampled into a tank, and polycrystalline silicon was produced using the same experimental apparatus as in Example 1. The result of impurity quantification on the obtained polycrystalline silicon is shown in Table 1.

**[Table 1]**

| Impurity Element | Boron | Phosphorus | Arsenic | Aluminum |
|---|---|---|---|---|
| Example 1 | 0.003 | 0.025 | <0.002 | <0.002 |
| Comparative Example 1 | 0.005 | 0.070 | <0.002 | <0.002 |

[ppba]

The results shown in Table 1 verify the effect of activated carbon adsorption on reducing the amounts of impurities contained in high-purity polycrystalline silicon.

### Example 2: Regeneration of activated carbon having adsorbed impurity compounds from silane

A SUS tube having an inner diameter of 10.7 mm and a height of 400 mm was filled with 20.3 g of activated carbon. A 5.8 L tank was filled with 6.0 kg of impurity compound-containing TCS containing 5,400 ppbw of boron. A closed cycle consisting of supplying the liquid from the tank to the bottom of the column by a pump at a rate of 1.2 L/hr and returning the liquid discharged from the top of the column to the tank was continuously performed at 15°C for 2 days to cause the activated carbon to reach adsorption saturation.

The liquid in the tank had a decreased boron concentration of 1,080 ppbw after the adsorption saturation. The boron adsorption capacity of new activated carbon was 1.28 mg per g of activated carbon. The quantification of boron was done by ICP optical emission spectroscopy (ICP-OES).

Afterwards, the exterior of the activated carbon-filled column was heated with an electrical heater at 150°C for 12 hr simultaneously with feed of nitrogen gas into the column at a rate of 1 L/min. Then, with the feed of nitrogen gas and the heating being continued, the column was subjeted with a vacuum pump to an internal pressure of 5 KPaA and was heat-treated at 150°C for 12 hr.

The activated carbon-filled column thus treated was connected again to a tank filled with 3.0 kg of impurity compound-containing TCS containing 5,400 ppbw of boron, and the closed pumping cycle was performed at 15°C for 2 days to cause the activated carbon to reach adsorption saturation.

The liquid in the tank had a decreased boron concentration of 860 ppbw after the adsorption saturation. The boron adsorption capacity of the treated activated carbon was 0.68 mg per g of activated carbon, which means that the activated carbon yielded an adsorption capacity of 53% of that of a new one.

The above procedures were further repeated. Even in the second experiment, the activated carbon yielded an adsorption capacity of 50% of that of a new one.

The above results verify the effect of regeneration of activated carbon having adsorbed impurity compounds from chlorosilane.

### Industrial Applicability

The present invention provides a method for producing semiconductor-grade high-purity polycrystalline silicon in a closed system, the method comprising recovering chlorosilane contained in reaction exhaust gas and circulating the recovered chlorosilane to resupply and reuse the recovered chlorosilane for polycrystalline silicon deposition reaction without discharging the recovered chlorosilane out of the system.

## Claims

1. A method for producing polycrystalline silicon, the method comprising:
step A of reacting trichlorosilane (TCS) or a mixture of TCS and dichlorosilane (DCS) with hydrogen to deposit polycrystalline silicon;
step B of recovering exhaust gas generated in the step A and separating the exhaust gas into condensable chlorosilane and other gases;
step C of distilling the chlorosilane condensed in the step B to fractionate the chlorosilane into recovered chlorosilane and another fraction, the recovered chlorosilane being a mixed fraction of TCS and components having lower boiling points than TCS;
step F of redistilling all of the recovered chlorosilane fractionated in the step C or a lower-boiling fraction in the recovered chlorosilane to fractionate into an impurity-enriched recovered chlorosilane being a lower-boiling fraction containing the enriched impurity compounds and a TCS fraction, the impurity-enriched recovered chlorosilane obtained is delivered to the step D, and the TCS is delivered to the step A;
step D of bringing the impurity-enriched recovered chlorosilane ffrom step F into contact with an adsorbent to reduce an impurity content of the recovered chlorosilane and thereby obtain chlorosilane with a reduced impurity content; and
step E of supplying to the step A the chlorosilane with a reduced impurity content which is obtained in the step D.

2. The method for producing polycrystalline silicon according to claim 1, wherein regeneration treatment in the step D is performed on an adsorption apparatus configured to be capable of undergoing the regeneration treatment without replacement of an adsorbent, and the regeneration treatment is performed one or more times during a period between the start and end of deposition reaction of the polycrystalline silicon in the step A.

3. The method for producing polycrystalline silicon according to claim 2, wherein the regeneration treatment involved in the step D is accomplished by a regeneration technique of heating the adsorbent and at the same time allowing an inert gas to flow inside the adsorption apparatus.

4. The method for producing polycrystalline silicon according to claim 3, wherein the inert gas used in the regeneration treatment is nitrogen, hydrogen, helium, or argon which has a dew point not higher than -20°C.

5. The method for producing polycrystalline silicon according to claim 2 or 3, wherein the adsorption apparatus used in the step D comprises two or more adsorption columns, and the regeneration treatment is performed after switching between the two or more adsorption columns.

6. The method for producing polycrystalline silicon according to any one of claims 1 to 4, wherein the adsorbent is selected from activated carbon, activated alumina, and high silica zeolite.

## Patentansprüche

1. Verfahren für die Herstellung von polykristallinem Silicium, wobei das Verfahren Folgendes umfasst:
Schritt A zur Reaktion von Trichlorsilan (TCS) oder einer Mischung aus TCS und Dichlorsilan (DCS) mit Wasserstoff, um polykristallines Silicium abzuschneiden;
Schritt B zur Rückgewinnung von Abgas, das in dem Schritt A erzeugt wurde, und Auftrennung des Abgases in kondensierbares Chlorsilan und andere Gase;
Schritt C zur Destillation des Chlorsilans, das in dem Schritt B kondensiert wurde, um das Chlorsilan in rückgewonnenes Chlorsilan und eine weitere Fraktion zu fraktionieren, wobei das rückgewonnene Chlorsilan eine gemischte Fraktion aus TCS und Komponenten ist, die niedrigere Siedepunkte als TCS aufweisen;
Schritt F zur erneuten Destillation des gesamten rückgewonnenen Chlorsilans, das in dem Schritt C fraktioniert wurde, oder einer niedriger siedenden Fraktion in dem rückgewonnenen Chlorsilan, um in ein mit Verunreinigung angereichertes, rückgewonnenes Chlorsilan, das eine niedriger siedende Fraktion ist, die die angereicherten Verunreinigungsverbindungen enthält, und eine TCS-Fraktion zu fraktionieren, wobei das erhaltene, mit Verunreinigung angereicherte, rückgewonnene Chlorsilan an den Schritt D übergeben wird und das TCS an den Schritt A übergeben wird;
Schritt D zum Inkontaktbringen des mit Verunreinigung angereicherten, rückgewonnenen Chlorsilans aus Schritt F mit einem Adsorptionsmittel, um einen Verunreinigungsgehalt des rückgewonnenen Chlorsilans zu verringern und dadurch Chlorsilan mit einem verringerten Verunreinigungsgehalt zu erhalten; und
Schritt E zur Zuführung zu dem Schritt A des Chlorsilans mit einem verringerten Verunreinigungsgehalt, das in dem Schritt D erhalten wird.

2. Verfahren für die Herstellung von polykristallinem Silicium nach Anspruch 1, wobei die Regenerierungsbehandlung in dem Schritt D an einer Adsorptionsvorrichtung durchgeführt wird, die konfiguriert ist, dass sie die Regenerierungsbehandlung ohne Austausch eines Adsorptionsmittel durchlaufen kann, und die Regenerierungsbehandlung ein- oder mehrmals während einer Zeitdauer zwischen dem Beginn und Ende der Abscheidungsreaktion des polykristallinen Siliciums in dem Schritt A durchgeführt wird.

3. Verfahren für die Herstellung von polykristallinem Silicium nach Anspruch 2, wobei die Regenerierungsbehandlung, die in dem Schritt D eingeschlossen ist, von einer Regenerierungstechnik der Erwärmung des Adsorptionsmittels erreicht wird und gleichzeitig ermöglicht, dass ein Inertgas innerhalb der Adsorptionsvorrichtung fließt.

4. Verfahren für die Herstellung von polykristallinem Silicium nach Anspruch 3, wobei das Inertgas, das bei der Regenerierungsbehandlung verwendet wird, Stickstoff, Wasserstoff, Helium oder Argon ist, das einen Taupunkt von nicht höher als -20 °C aufweist.

5. Verfahren für die Herstellung von polykristallinem Silicium nach Anspruch 2 oder 3, wobei die Adsorptionsvorrichtung, die in dem Schritt D verwendet wird, zwei oder mehr Adsorptionssäulen umfasst und die Regenerierungsbehandlung nach dem Wechsel zwischen den zwei oder mehr Adsorptionssäulen durchgeführt wird.

6. Verfahren für die Herstellung von polykristallinem Silicium nach einem der Ansprüche 1 bis 4, wobei das Adsorptionsmittel aus Aktivkohle, aktiviertem Aluminiumoxid und Zeolith mit hohem Siliciumdioxidgehalt ausgewählt ist.

## Revendications

1. Méthode de production de silicium polycristallin, la méthode comprenant :
une étape A de réaction de trichlorosilane (TCS) ou d'un mélange de TCS et de dichlorosilane (DCS) avec de l'hydrogène afin de déposer du silicium polycristallin ;
une étape B de récupération du gaz d'échappement généré dans l'étape A et de séparation du gaz d'échappement en chlorosilane condensable et autres gaz ;
une étape C de distillation du chlorosilane condensé dans l'étape B afin de fractionner le chlorosilane en chlorosilane récupéré et une autre fraction, le chlorosilane récupéré étant une fraction mixte de TCS et de composants ayant des points d'ébullition inférieurs au TCS ;
une étape F de redistillation de l'ensemble du chlorosilane récupéré et fractionné dans l'étape C ou d'une fraction de point d'ébullition inférieur dans le chlorosilane récupéré afin de fractionner en un chlorosilane récupéré enrichi en impuretés étant une fraction de point d'ébullition inférieur contenant les composés d'impuretés enrichis et une fraction de TCS, le chlorosilane récupéré enrichi en impuretés et obtenu est distribué vers l'étape D, et le TCS est distribué vers l'étape A ;
une étape D de mise en contact du chlorosilane récupéré enrichi en impuretés issu de l'étape F avec un adsorbant afin de réduire une teneur en impuretés du chlorosilane récupéré pour obtenir ainsi un chlorosilane ayant une teneur en impuretés réduite ; et
une étape E d'apport à l'étape A du chlorosilane ayant une teneur en impuretés réduite qui est obtenu dans l'étape D.

2. Méthode de production de silicium polycristallin selon la revendication 1, dans laquelle le traitement de régénération dans l'étape D est mis en oeuvre dans un appareil d'adsorption configuré pour être capable de subir le traitement de régénération sans remplacement d'un adsorbant, et le traitement de régénération est mis en oeuvre une ou plusieurs fois pendant une période entre le début et la fin d'une réaction de dépôt du silicium polycristallin dans l'étape A.

3. Méthode de production de silicium polycristallin selon la revendication 2, dans laquelle le traitement de régénération impliqué dans l'étape D est mis en oeuvre par une technique de régénération consistant à chauffer l'adsorbant et en même temps de permettre à un gaz inerte de s'écouler à l'intérieur de l'appareil d'adsorption.

4. Méthode de production de silicium polycristallin selon la revendication 3, dans laquelle le gaz inerte utilisé dans le traitement de régénération est l'azote, l'hydrogène, l'hélium, ou l'argon ayant un point de rosée non supérieur à -20°C.

5. Méthode de production de silicium polycristallin selon la revendication 2 ou 3, dans laquelle l'appareil d'adsorption utilisé dans l'étape D comprend deux, ou plus, colonnes d'adsorption, et le traitement de régénération est mis en oeuvre après commutation entre les deux, ou plus, colonnes d'adsorption.

6. Méthode de production de silicium polycristallin selon l'une quelconque des revendications 1 à 4, dans laquelle l'adsorbant est choisi parmi le charbon actif, l'alumine active, et une zéolithe à haute teneur en silice.
